**Europäisches Patentamt**

**European Patent Office**

**Office européen des brevets**

(19)

(11) Veröffentlichungsnummer: **0 023 949**
**B1**

## EUROPÄISCHE PATENTSCHRIFT

(12)

(45) Veröffentlichungstag der Patentschrift:
27.04.83

(21) Anmeldenummer: 80102755.8

(22) Anmeldetag: 19.05.80

(51) Int. Cl.³: **H 01 C 10/32**, H 01 C 10/48,
**H 01 C 10/08**

(54) Potentiometer in Dickschichttechnologie.

(30) Priorität: 13.08.79 DE 2932714

(43) Veröffentlichungstag der Anmeldung:
18.02.81 Patentblatt 81/7

(45) Bekanntmachung des Hinweises auf die Patenterteilung:
27.04.83 Patentblatt 83/17

(84) Benannte Vertragsstaaten:
CH GB IT LI SE

(56) Entgegenhaltungen:
DE-A-2 004 335
DE-A-2 715 475
DE-B-2 202 866
DE-C-701 808
DE-C-2 265 331
DE-U-7 646 321
US-A-2 632 831
US-A-3 355 694
US-A-3 833 407
US-A-3 998 980
US-A-4 032 881
US-A-4 134 096

(73) Patentinhaber: VDO Adolf Schindling AG,
Gräfstrasse 103, D-6000 Frankfurt/Main (DE)

(72) Erfinder: Pudelko, Heinz, im Weimel 4,
D-6000 Frankfurt/Main (DE)
Erfinder: Weber, Klaus, Hünerbergstrasse 8,
D-6242 Kronberg 2 (DE)

(74) Vertreter: Könekamp, Herbert, Dipl.-Ing., Sodener
Strasse 9, D-6231 Schwalbach (DE)

## Potentiometer in Dickschichttechnologie

Die Erfindung bezieht sich auf einen Drehwiderstand in Dickschichttechnologie mit einem um eine Drehachse verschwenkbaren Schleifer und einem Substrat mit einer Anzahl von nebeneinander angeordneten, mit dem Schleifer zusammenwirkenden Leiterbahnen und mit einer neben der gekrümmten Bahn des Schleifers auf den Leiterbahnen angeordneten Widerstandsschicht.

Es ist bereits ein Drehwiderstand dieser Gattung bekannt (DE-PS 701 800), der aus einer Isolierstoffplatte und einem mit seiner Drehachse in dieser gelagerten Schleifer besteht, der längs seiner bogenförmigen Schleiferbahn verschwenkbar ist. Auf der Isolierstoffplatte ist eine Anzahl nebeneinanderliegender, mit dem Schleifer zusammenwirkender, streifenförmiger Metalleiter vorhanden, die im wesentlichen radial ausgerichtet sind. Neben der Schleiferbahn ist eine Widerstandsschicht aus Kohle auf die Metalleiter aufgebracht. Dieser bekannte Drehwiderstand hat den Nachteil, dass seine Messwertauflösung erheblich zu wünschen übrig lässt. Dies ist im wesentlichen auf die radiale Anordnung der Metalleiter zurückzuführen, die eine hohe Packungsdichte in der Fläche nicht zulässt. Ein weiterer Nachteil dieses bekannten Drehwiderstands besteht darin, dass aufgrund der kreisringsektorförmigen Ausbildung der einzelnen Metalleiter bereits geringe radiale Relativverschiebungen zwischen dem Schleifer und der Isolierstoffplatte, wie sie durch übliche Fertigungstoleranzen entstehen können, zu erheblichen Änderungen der Widerstands-Weg-Kennlinie des Drehwiderstands führen.

Es sind des weiteren Drehwiderstände bekannt (US-PS 4 032 881), bei denen mindestens eine Widerstandsschicht auf Leiterbahnen aufgebracht ist und der Schleifer über seinen gesamten Winkelbereich auf der Widerstandsschicht schleift. Dies führt zwar zu einer hohen Messwertauflösung, bringt aber eine Reihe zum Teil schwerwiegender Nachteile mit sich. So muss mit einem bei hochohmigen Widerstandsmassen hohen Übergangswiderstand zwischen der Widerstandsbahn und dem Schleifer gerechnet werden. Um den Übergangswiderstand nicht zu gross werden zu lassen, ist ein genügend hoher Kontaktauflagedruck des Schleifers vorzusehen, wodurch wiederum mit übermässigem Verschleiss des Kontakts und der Widerstandsbahn gerechnet werden muss, was wiederum den Übergangswiderstand beeinflusst. Die Kennlinie des Potentiometers erfährt bei verhältnismässig geringfügigen Änderungen des Übergangswiderstands, z.B. durch Kontaktverschleiss, variablen Kontaktdruck oder Axialspiel eine erhebliche Beeinflussung. Bei nicht linearen Kennlinien entsteht eine unebene Schleiferbahn durch Überkreuzungen der Abgleichmesspunkte, die durch die Leiterbahnen gebildet werden, und Übergänge zwischen den Widerstandsschichtbereichen. Ausserdem tritt ein hoher und wechselnder Rauschwiderstand auf. In mechanischer Hinsicht erfordert der angestrebte verhältnismässig hohe Kontaktauflagedruck ein entsprechend grosses Drehmoment zur Verstellung des Potentiometers.

Diese Nachteile der bekannten Drehwiderstände sollen durch die Erfindung überwunden werden. Es ist daher Aufgabe der Erfindung, einen einstellbaren Drehwiderstand zu schaffen, der eine hohe Messwertauflösung bei möglichst geringem Verschleiss im Bereich der Leiterbahn und konstantem Übergangswiderstand aufweist und der unempfindlich gegen kleine radiale Relativverschiebungen zwischen Schleifer und Trägerplatte ist, so dass er mit geringem Aufwand herstellbar ist.

Diese Aufgabe wird ausgehend von einem Drehwiderstand der eingangs beschriebenen Gattung erfindungsgemäss dadurch gelöst, dass die Leiterbahnen zumindest im Bereich der Schleiferbahn parallel zueinander verlaufen, dass der Abstand zwischen zwei benachbarten, parallelen Leiterbahnen etwa gleich gross wie die Breite der Leiterbahnen ist, dass die Widerstandsbahn ausschliesslich ausserhalb der Schleiferbahn über und neben den Leiterbahnen auf dem Trägersubstrat aufgebracht ist und dass die Widerstandsschicht zum Abgleich der zwischen den parallelen Leiterbahnen liegenden Widerstandselemente mit linienförmigen Ausnehmungen versehen ist.

Durch die bei Drehwiderständen völlig unübliche Anordnung der Leiterbahnen parallel zueinander und durch den gewählten Abstand lässt sich eine sehr hohe Leiterbahnenpackungsdichte in der Fläche erreichen, was zu einer im Vergleich zu den bekannten Drehwiderständen erheblichen Verbesserung der Messwertauflösung führt. Die durch die parallele Anordnung der Leiterbahnen hervorgerufene Problematik der Unterbringung der Widerstandsschicht auf der Trägerplatte wird dadurch aufgehoben, dass mindestens ein Teil der Widerstandsschicht beidseits der Schleiferbahn angeordnet wird. Die durch die parallele Leiterbahnanordnung sich ergebenden Änderungen in der Widerstands-Weg-Kennlinie, die darauf zurückzuführen sind, dass der Schleifer nicht in jedem Punkt der Schleiferbahn die Leiterbahnen rechtwinklig überquert, sondern an verschiedenen Punkten unter verschiedenen Winkeln, können unter anderem durch die linienförmigen Ausnehmungen in den Widerstandsschichten kompensiert werden. Infolge des rein metallischen Übergangs zwischen Schleifer und Schleiferbahn entstehen nur kleine und gleichbleibende Übergangswiderstände, die durch Kontaktverschleiss, Kontaktdruckänderung, Axialspiel nur geringfügig beeinflusst werden. Die metallischen Materialien der Leiterbahnen und des Schleifers können ohne weiteres so ausgewählt werden, dass sich gute und gleichbleibende Gleiteigenschaften des Schleifers bei geringem Verschleiss ergeben. Zur Verstellung eines solchen Drehwiderstands brauchen nur geringfügige Drehmomente aufgebracht zu werden. Der Rauschwiderstand, der auf die Kontaktierung des Schleifers zurückzuführen ist, bleibt gering. Da die mechanischen Eigenschaften der Widerstandsmasse unkritisch sind, können billige Druckpasten, z.B. Kohleschichtpasten ohne weiteres angewendet werden. Darüber hinaus besteht eine einfache Möglichkeit zur Temperaturkompensation, auf die weiter unten eingegangen wird.

Als vorteilhaft hat es sich erwiesen, die Leiterbahnen je zwischen 0,1 und 0,3 mm, vorzugsweise 0,2 mm, breit auszuführen und mit je einem gegenseitigen Abstand zwischen 0,1 mm und 0,3 mm, vorzugsweise etwa 0,2 mm, anzuordnen.

In besonders vorteilhafter Weise werden die Ausnehmungen durch einen Laserstrahl erzeugt. Mit diesem Laserstrahl ist ein besonders feiner Abgleich möglich. Eine andere Möglichkeit besteht darin, die Ausnehmung durch Sandstrahlen zu erzielen.

Zur Temperaturkompensation wird im einzelnen vorgesehen, dass die Leiterbahnen und die Widerstandsmasse aus Materialien gegensätzlicher Temperaturkoeffizienten bestehen.

Als besonders zweckmässig hat es sich erwiesen, die Leiterbahnen und die Widerstandsbahn bzw. -bahnen aus Materialien herzustellen, die bezogen auf das jeweils andere Material eine geringe Diffundierfähigkeit haben. Dadurch wird erreicht, dass sich nur geringfügige Änderungen in den Widerstandswerten während der Herstellung und insbesondere durch den Einbrennvorgang ergeben und mithin Widerstände besonders geringer Toleranzen erhalten werden können. Zudem erlaubt die Verwendung solcher Materialien geringer Diffundierfähigkeit eine besonders enge Anordnung der Leiterbahnen nebeneinander und damit eine besonders hohe Messwertauflösung.

Als vorteilhaft hat sich die Verwendung einer Widerstandsmasse aus einer Rutheniumverbindung und einer Goldpalladiumverbindung für die Leiterbahnen erwiesen, da hierbei eine Diffusion des Leiterbahnenmaterials in das Widerstandsmaterial nur in einem äusserst geringen, vernachlässigbaren Umfang auftritt. Da jedoch Goldpalladiumverbindungen verhältnismässig teuer sind, empfiehlt sich die Verwendung einer Widerstandsmasse aus einer Rutheniumverbindung und einer Silberpalladiumverbindung für die Leiterbahnen. Zwar tritt bei dieser Materialkombination eine merkbare Diffusion von Silber in die Widerstandsmasse auf, jedoch halten sich die dadurch bedingten Widerstandsänderungen in akzeptablen Grenzen, wenn die Abstände zwischen den Leiterbahnen nicht zu klein, d.h. etwa 0,2 mm, gewählt werden. Anstatt einer Silberpalladiumverbindung sind auch andere Silberverbindungen verwendbar, sofern diese einen nicht zu grossen Silberanteil — etwa bis 30% — besitzen und für die Dickschichttechnik geeignet sind.

Die Erfindung wird im folgenden anhand einer Zeichnung erläutert, in der ein Drehwiderstand in Dickschichttechnologie vergrössert in einer Draufsicht dargestellt ist.

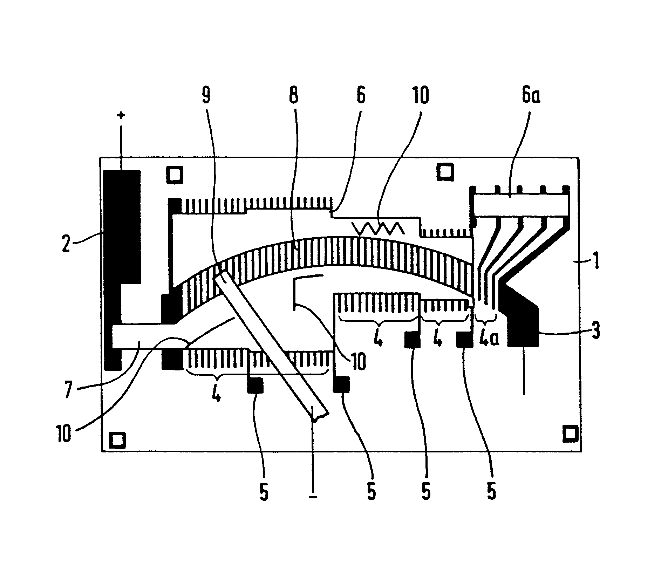

In der Zeichnung ist mit 1 ein Trägersubstrat bezeichnet, welches aus einem Keramikwerkstoff besteht. Auf dem Trägersubstrat 1 ist zwischen zwei verhältnismässig breiten Leiterbahnen 2 und 3, welche zur Kontaktierung des Potentiometers an dessen Ende dienen, eine Struktur dicht nebeneinander angeordneter Leiterbahnen 4 erkennbar. Einzelne dieser Leiterbahnen sind mit verstärkten Kontaktierungsflächen 5 versehen. Die Leiterbahnen 4 verlaufen über ihre gesamte Länge parallel zueinander, während die Leiterbahnen 4a parallele Endabschnitte und dazwischen radial verlaufende Abschnitte aufweisen.

Über den Leiterbahnen ist eine Widerstandsbahn 6 auf dem Substrat aufgebracht, das aus einer Widerstandsmasse aus Rutheniumoxid bestehen kann. Die Anwendung einer Kohleschichtpaste als Widerstandsmasse ist ebenfalls möglich, hat jedoch den Nachteil, dass sie nicht benzin- bzw. methanolbeständig ist und daher dann nicht verwendbar ist, wenn das Potentiometer beispielsweise in einem Benzinfüllstandsanzeigesystem zum Einsatz kommen soll. Die Widerstandsbahn besteht entsprechend der gewünschten Kennlinie des Potentiometers aus mehr oder weniger breiten Abschnitten, die ineinander übergehen. Abgesehen davon ist eine weitere kleine Widerstandsbahn 6a ausserhalb der Widerstandsbahn 6 angeordnet, die nicht direkt mit ihr über die Widerstandsmasse in Verbindung steht. Die Widerstandsbahn 6 ist durch die parallel verlaufenden Leiterbahnen 4 in Einzelwiderstände feinstufig unterteilt. Die Unterteilung der Widerstandsbahn 6a ist ebenfalls feinstufig, wobei jedoch hier mit gegebener Widerstandsmasse hochohmigere Abschnitte erzielt werden, da die Leiterbahnen im Bereich der Widerstandsbahn 6a weiter auseinandergerückt sind. Mit der linken breiten Leiterbahn 2 steht die Widerstandsbahn über einen Grundwiderstand 7 in Verbindung.

Aus der Zeichnung ist erkennbar, dass die Widerstandsbahn 6 durch die Schleiferbahn 8 in eine obere und eine untere Hälfte unterteilt ist. Die bogenförmige Schleiferbahn, die entsprechend der Bewegungsbahn des Endes des Schleifers 9 geformt ist, erstreckt sich somit im wesentlichen in Richtung der Widerstandsbahn. Die Leiterbahnen verlaufen hingegen im wesentlichen senkrecht zur Schleiferbahn.

Dieses Potentiometer hat die weiter oben geschilderten guten elektrischen und mechanischen Eigenschaften.

Zum Abgleich bzw. zur Erzielung der gewünschten Kennlinie, die an den verstärkten Punkten 5 gemessen werden kann, sind in der Widerstandsbahn Ausnehmungen, die durch Laserstrahlen erzeugt werden, vorgesehen, deren Ausformungen bei den Bezugsziffern 10 erkennbar sind.

**Patentansprüche**

1. Drehwiderstand in Dickschichttechnologie mit einem um eine Drehachse verschwenkbaren Schleifer und einem Substrat mit einer Anzahl von nebeneinander angeordneten, mit dem Schleifer zusammenwirkenden Leiterbahnen und mit einer neben der gekrümmten Bahn des Schleifers auf den Leiterbahnen angeordneten Widerstandsschicht, dadurch gekennzeichnet, dass die Leiterbahnen (4, 4a) zumindest im Bereich der Schleiferbahn (8) parallel zueinander verlaufen, dass der Abstand zwischen zwei benachbarten, parallelen Leiterbahnen (4, 4a) etwa gleich gross wie die Breite der Leiterbahnen (4, 4a) ist, dass die Widerstandsbahnen (6, 7) ausschliesslich ausserhalb der Schleiferbahn (8) über und neben den Leiterbahnen auf dem Trägersubstrat (1) aufgebracht ist und dass die Widerstandsschicht (6, 7) zum Abgleich der zwischen den parallelen Leiterbahnen (4, 4a) liegenden Widerstandselemente mit linienförmigen Ausnehmungen (10) versehen ist.

2. Potentiometer nach Anspruch 1, dadurch gekennzeichnet, dass die Leiterbahnen (4) je zwischen 0,1 mm und 0,3 mm, vorzugsweise 0,2 mm, breit sind und mit einem gegenseitigen Abstand zwischen 0,1 mm und 0,3 mm, vorzugsweise etwa 0,2 mm, angeordnet sind.

3. Drehwiderstand nach Anspruch 1 oder 2, dadurch gekennzeichnet, dass die linienförmigen Ausnehmungen (10) durch einen Laserstrahl erzeugt sind.

4. Potentiometer nach einem der Ansprüche 1 bis 3, dadurch gekennzeichnet, dass die Leiterbahnen (4, 4a) und die Widerstandsmasse aus Materialien mit entgegengesetzten Temperaturkoeffizienten bestehen.

5. Potentiometer nach einem der Ansprüche 1 bis 4, dadurch gekennzeichnet, dass die Leiterbahnen (4, 4a) und die Widerstandsmasse aus Materialien geringer Diffundierfähigkeit bezogen auf das andere Material bestehen.

6. Potentiometer nach Anspruch 5, dadurch gekennzeichnet, dass die Widerstandsmasse aus einer Rutheniumverbindung und die Leiterbahnen aus einer Goldpalladiumverbindung bestehen.

7. Potentiometer nach Anspruch 5, dadurch gekennzeichnet, dass die Widerstandsmasse aus einer Rutheniumverbindung und die Leiterbahnen aus einer Silberpalladiumverbindung bestehen.

## Claims

1. Rotary rheostat in thick-film technology comprising a slider turnable about an axis of rotation and a substrate with a number of juxtaposed conductor paths coacting with the slider, and with a resistance layer disposed beside the curved path of the slider on the conductor paths, characterised in that the conductor paths (4, 4a) extend parallel to one another at least in the region of the slider path (8), in that the spacing between two adjacent, parallel conductor paths (4, 4a) is substantially as great as the width of the conductor paths (4, 4a), in that the resistance path (6, 7) is applied exclusively outside the slider path (8) above and beside the conductor paths on the carrier substrate (1), and in that the resistance layer (6, 7) is provided with line-form recesses (10) for balancing the resistance elements lying between the parallel conductor paths (4, 4a).

2. Potentiometer according to Claim 1, characterised in that the conductor paths (4) are each between 0.1 mm and 0.3 mm, preferably 0.2 mm, wide and are disposed at a distance between 0.1 mm and 0.3 mm, preferably about 0.2 mm, from one another.

3. Rotary rheostat according to Claim 1 or 2, characterised in that the line-form recesses (10) are produced by a laser beam.

4. Potentiometer according to one of Claims 1 to 3, characterised in that the conductor paths (4, 4a) and the resistance mass consist of materials having opposite temperature coefficients.

5. Potentiometer according to one of Claims 1 to 4, characterised in that the conductor paths (4, 4a) and the resistance mass consist of materials having low diffusibility in relation to the other material.

6. Potentiometer according to Claim 5, characterised in that the resistance mass consists of a ruthenium compound and the conductor paths consist of a gold-palladium compound.

7. Potentiometer according to Claim 5, characterised in that the resistance mass consists of a ruthenium compound and the conductor paths consist of a silver-palladium compound.

## Revendications

1. Rhéostat rotatif réalisé selon la technologie des couches épaisses, comportant un curseur pouvant pivoter autour d'un axe de rotation, un substrat présentant un certain nombre de pistes conductrices juxtaposées et coopérant avec ledit curseur, ainsi qu'une couche résistante placée à côté de la piste curviligne dudit curseur sur lesdites pistes conductrices, rhéostat caractérisé par le fait que les pistes conductrices (4, 4a) sont parallèles les unes aux autres au moins dans la région de la piste (8) du curseur; par le fait que la distance entre deux pistes conductrices voisines (4, 4a) est sensiblement égale à la largeur de ces pistes conductrices (4, 4a); par le fait que la piste résistante (6, 7) est appliquée exclusivement à l'extérieur de la piste (8) du curseur, au-dessus côte-à-côte des pistes conductrices sur le substrat de support (1); et par le fait que la couche résistante (6, 7) comporte des enlèvements de matières linéaires (10) en vue de l'équilibrage des éléments de résistance placés entre les pistes conductrices parallèles (4, 4a).

2. Potentiomètre selon la revendication 1, caractérisé par le fait que la largeur de chaque piste conductrice (4) est comprise entre 0,1 mm et 0,3 mm, de préférence de 0,2 mm, les pistes conductrices étant à un espacement compris entre 0,1 mm et 0,3 mm, de préférence d'environ 0,2 mm.

3. Rhéostat rotatif selon la revendication 1 ou 2, caractérisé par le fait que les enlèvements de matières linéaires (10) sont réalisés par un faisceau laser.

4. Potentiomètre selon l'une des revendications 1 à 3, caractérisé par le fait que les pistes conductrices (4, 4a) et la masse résistive sont en des matières ayant des coefficients de température de signes opposés.

5. Potentiomètre selon l'une des revendications 1 à 4, caractérisé par le fait que les pistes conductrices (4, 4a) et la masse résistive sont en des matières de faible diffusibilité l'une par rapport à l'autre.

6. Potentiomètre selon la revendication 5, caractérisé par le fait que la masse résistive est un composé de ruthénium et les pistes conductrices sont en un composé d'or et de palladium.

7. Potentiomètre selon la revendication 5, caractérisé par le fait que la masse résistive est un composé de ruthénium et les pistes conductrices sont en un composé d'argent et de palladium.